## Europäisches Patentamt

## European Patent Office

## Office européen des brevets

(11) Veröffentlichungsnummer: **0 144 972**
**B1**

(12) **EUROPÄISCHE PATENTSCHRIFT**

(45) Veröffentlichungstag der Patentschrift:
**24.06.87**

(51) Int. Cl.⁴: **G 21 C 1/06**, G 21 C 13/02

(21) Anmeldenummer: **84114783.8**

(22) Anmeldetag: **05.12.84**

(54) **Behältersystem für einen Hochtemperaturkernreaktor.**

(30) Priorität: **15.12.83 DE 3345457**

(43) Veröffentlichungstag der Anmeldung:
**19.06.85 Patentblatt 85/25**

(45) Bekanntmachung des Hinweises auf die Patenterteilung:
**24.06.87 Patentblatt 87/26**

(84) Benannte Vertragsstaaten:
**BE CH DE FR GB LI NL SE**

(56) Entgegenhaltungen:
**DE - A - 2 818 602**
**FR - A - 2 373 857**
**FR - A - 2 385 183**

**NUCLEAR TECHNOLOGY, Band 62, Nr. 1, Juli 1983,**
**Seiten 22-30, Danville, Illinois, US; H. REUTLER u.a.:**
**"The modular high-temperature reactor"**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Reutler, Herbert, Dr. Dipl.-Ing., Weissenburgstrasse 33, D-5000 Köln 1 (DE)**
Erfinder: **Ullrich, Manfred, Kippekausen 115, D-5060 Bergisch-Gladbach (DE)**

(74) Vertreter: **Mehl, Ernst, Dipl.-Ing. et al, Postfach 22 01 76, D-8000 München 22 (DE)**

## Beschreibung

Die vorliegende Erfindung betrifft ein Behältersystem für einen Hochtemperaturkernreaktor der Art, wie er beispielsweise in der DE-A-3 016 402 beschrieben worden ist. Dort wurde unter anderem vorgeschlagen, einen den eigentlichen Kernreaktor enthaltenden Kernbehälter in einem stählernen Druckbehälter anzuordnen, wie er bislang beim Bau von wassergekühlten Reaktoren Verwendung fand. Dabei wurde davon ausgegangen, dass die Zwischenräume zwischen dem Druckbehälter und seinen Einbauten überall miteinander in Verbindung stehen und mit dem als Kühlfluid verwendeten Helium gefüllt sein würden. Auch fehlten in der genannten Druckschrift Angaben über die Art und Weise, in der der Kernbehälter im Druckbehälter befestigt werden sollte.

Die vorliegende Erfindung hat zur Aufgabe, die genannte Konstruktion dahingehend zu verbessern, dass derjenige Teil des Zwischenraumes zwischen Kern- und Druckbehälter, in dem Einrichtungen angeordnet sind, die einer häufigen Prüfung oder Wartung bedürfen (z.B. die üblicherweise in der Decke des Kernbehälters angeordneten Absorberstabantriebe oder die Zugabevorrichtungen für z.B. kugelförmige Brennelemente) zugänglich gemacht werden kann, ohne dass die Gefahr eines Einbruchs der äusseren Atmosphäre (d.h. von sauerstoffhaltiger Luft) in das Innere des Kernbehälters befürchtet werden muss, was zu erheblicher Korrosion der aus Kohlestein und/oder Graphit bestehenden Einbauten desselben oder der Brennelemente führen würde.

Die Lösung dieser Aufgabe erfolgt durch die im kennzeichnenden Teil des ersten Anspruchs angegebenen Mittel. Eine ohnehin zur Halterung des Kernbehälters im Druckbehälter erforderliche Auflage wird so ausgestaltet, dass sie zugleich als Trennwand zwischen dem oberen Teil des genannten Zwischenraumes und dem unteren Teil desselben dient, in welch letzterem allein die Zu- und Abfuhreinrichtungen für das Kühlfluid liegen. Der Fachmann kann die erforderliche Grösse der Dichtfläche bei bekanntem Gewicht des Kernbehälters unschwer so bemessen, dass bei geeigneter Ausführung der Dichtflächen (wegen der hohen Betriebstemperaturen kommen keine Elastomeredichtungen in Frage, sondern vorzugsweise Metall-O-Ringe) die erforderliche Dichtwirkung durch das Eigengewicht des Kernbehälters erzielt wird. Da letzterer zu Reparaturzwecken ausbaubar sein soll, wird auf eine formschlüssige Verbindung von Kernbehälter und Auflageflansch verzichtet. Das Gewicht des Kernbehälters reicht auch aus, um ein Abheben desselben sicher zu verhindern, wenn im unteren Teil des Zwischenraumes ein geringfügig höherer Druck herrscht als im oberen Teil (bei einem Betriebsdruck des Reaktors von z.B. 40 bar eine Druckdifferenz von 2 bar). Der obere Zwischenraum wird zweckmässigerweise ebenfalls mit Helium gefüllt, das jedoch, da es nicht durch den Kernreaktor und andere Anlagenteile (etwa Wärmetauscher) zirkuliert nicht verunreinigt wird; es können daher auch keine radioaktiven Ablagerungen im oberen Zwischenraum auftreten, die die gewünschte Zugänglichkeit des Kernbehälters einschränken würden. Da im oberen Zwischenraum keine das Kühlmedium führenden Leitungen vorhanden sind, kann der Kernbehälter hier dicht ausgeführt werden bzw. können mit bekannten Mitteln der Technik (z.B. Flachschiebern) die für Absorberstabantriebe usw. erforderlichen Durchdringungen gasdicht ausgeführt werden.

Um eine Kontaminierung des den oberen Zwischenraum füllenden Gases durch etwaige Kleinstleckagen an der Dichtfläche zwischen Kern- und Druckbehälter zu verhindern, kann der obere Zwischenraum zweckmässigerweise unter einem geringen Überdruck gehalten werden.

Grössere Druckdifferenzen zwischen oberem und unterem Zwischenraum werden mit Hilfe der im zweiten Anspruch vorgeschlagenen Ausgestaltung der Erfindung beherrscht. Durch die Begrenzung der Druckdifferenz wird der Übertritt grösserer Leckmengen in der einen oder anderen Richtung verhindert. Die hier vorgeschlagene Einrichtung reicht aus, um die im normalen Betrieb zu erwartenden Druckdifferenzen auszugleichen.

Für den unterstellten Fall eines plötzlichen Auftretens eines grösseren Lecks im Druckbehälter jedoch wird die im dritten Anspruch definierte Ausgestaltung der Erfindung vorgeschlagen. Berstscheibensicherungen sind bekannte Bauelemente, die im Normalbetrieb völlig dicht sind, beim Überschreiten eines bestimmten Ansprechdrucks jedoch eine zu diesem Zweck vorhandene, für die Erzielung eines ausreichend schnellen Druckausgleichs bemessene Leitung völlig freigeben. Eine den unteren Zwischenraum mit dem oberen auf kürzestem Wege verbindende Leitung würde jedoch das Auftreten einer Naturkonvektion begünstigen, wodurch die die in den oberen Zwischenraum durch das Leck eingedrungene Luft auch in das Innere des Kernbehälters gelangen könnte, was wie oben ausgeführt vermieden werden soll. Durch die hier geforderte zweite Ausgleichsleitung wird nach Öffnen der Berstscheibensicherung der durch das Leck in den oberen Zwischenraum eingedrungenen kalten Luft ein unmittelbarer Weg an das untere Ende des unteren Zwischenraumes gebahnt und so dieser ebenfalls damit geflutet. Die Temperaturdifferenz zu den nach Ausfall bzw. Abstellen der Kühlgasgebläse im Inneren des Kernbehälters im Naturumlauf zirkulierenden, die Nachwärme der Brennelemente abführenden Gas bewirkt eine Schichtung, die ein Eindringen der korrodierenden Luft in denselben verhindert.

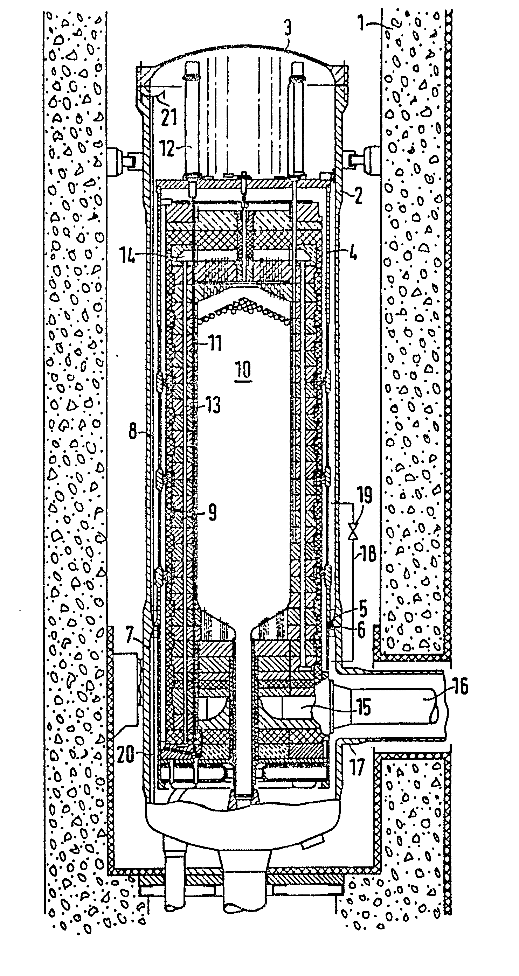

Ein Ausführungsbeispiel der Erfindung ist in der Zeichnung dargestellt und zwar zeigt diese einen gasgekühlten Hochtemperaturreaktor im Längsaxialschnitt.

Innerhalb einer der Strahlenabschirmung dienenden Betonstruktur 1 ist ein stählerner Druckbehälter 2 angeordnet, der an seinem oberen Ende mit einem abnehmbaren Deckel 3 versehen ist. Innerhalb des Druckbehälters 2 ist ein ebenfalls metallischer Kernbehälter 4 angeordnet, der mit einem umlaufenden Vorsprung 5 auf einem ebenfalls umlaufenden, an der Innenseite des Druckbehälters 2 angeformten Flansch 6 aufliegt, wobei die Berührungsflächen zwischen beiden nach Grösse und Oberflächenbeschaffenheit so ausgeführt sind, dass eine auch gegenüber geringen Druckdifferenzen wirksame gasdichte Absperrung zwischen einem zwischen Druck- und Kernbehälter verbleibenden unteren Zwischenraum 7 und einem entsprechenden oberen Zwischenraum 8 erreicht wird. Der Kernbehälter 4 enthält keramische Einbauten 9 aus Kohlestein und/oder Graphit, die einen Raum zur Aufnahme einer Spaltzone 10 umschliessen, die aus einer Vielzahl von kugelförmigen Brennelementen besteht. In den Einbauten 9 verlaufen unter anderem Kanäle 11, in denen zur Regelung der Spaltzone Absorberstäbe mit Hilfe bekannter, auf der Decke des Kernbehälters 4 angeordneter Antriebe 12 verfahren werden können. In den Einbauten 9 sind weitere Kanäle 13 angelegt, durch die das von einer hier nicht gezeigten Wärmesenke kommende, in den unteren Zwischenraum 7 eintretende Kühlgas in einen oberen Sammelraum 14 geleitet wird (dabei die Einbauten 9 kühlend) und von diesem aus von oben nach unten durch die Spaltzone geschickt wird. Das in einem unteren Sammelraum 15 zusammenströmende erhitzte Kühlgas wird über eine koaxial in einem Stutzen 17 des Druckbehälters 2 angeordnete Heissgasleitung 16 der Wärmesenke zugeführt. Der obere Zwischenraum 8 wird ebenfalls mit dem vorzugsweise als Kühlgas verwendeten Helium gefüllt, das jedoch stagniert und dabei gegenüber dem unteren Zwischenraum unter einem geringen Überdruck gehalten werden kann, damit die Kontamination des Gases durch die im eigentlichen Kühlgas unvermeidlicherweise vorhandenen, beim Durchgang durch die Spaltzone aufaktivierbaren Verunreinigungen verhindert wird. Da der Kernbehälter 4 oberhalb der Auflagerung 5, 6 dicht ausgeführt ist, kann zu Reparatur- und Wartungszwecken (z.B. an den Absorberstabantrieben 12) der Kernreaktordeckel 3 abgenommen werden, ohne dass die Zugänglichkeit der dann freiliegenden Teile durch eine radioaktive Kontamination besonders erschwert würde und ohne dass die dann den oberen Zwischenraum 8 füllende Luft an die Einbauten 9 gelangen und diese korrodieren könnte. Unterer Zwischenraum 7 und oberer Zwischenraum 8 stehen über eine hier nur schematisch angedeutete erste Ausgleichsleitung 18 in Verbindung, die durch ein Ventil 19 absperrbar ist und über die die im normalen Reaktorbetrieb erforderliche Anpassung der jeweiligen Drücke aneinander entsprechend den unterschiedlichen Betriebsbedingungen erfolgen kann. Für den Ausgleich der bei einem plötzlich auftretenden grösseren Leck im Druckbehälter 2 auftretenden Druckdifferenzen reicht diese Leitung jedoch nicht aus. Dafür ist eine zweite Ausgleichsleitung 20 vorhanden, die nahe dem unteren Ende des Kernbehälters 4 beginnt und im Spalt zwischen diesem und den Einbauten 9 an das obere Ende desselben geführt ist, wo sie mit einer ebenfalls nur schematisch angedeuteten Berstscheibensicherung 21 versehen ist. Diese gibt im Bedarfsfall schnell einen zum Druckausgleich ausreichenden Querschnitt frei und verhindert so ein etwaiges Abheben des Kernbehälters 4 von seiner Auflage 5, 6. Durch die auch bei dem dann abgeschalteten Reaktor sich noch entwickelnde Nachzerfallswärme wird das im Inneren des Kernbehälters 4 befindliche Kühlgas in eine konvektive Strömung versetzt, die die Nachwärmeabfuhr aus der Spaltzone 10 besorgt. Durch die jetzt offene zweite Ausgleichsleitung 20 strömt die in den oberen Zwischenraum 8 eingedrungene kalte und daher schwerere Luft auch in den unteren Zwischenraum 7, diesen füllend. In das Innere des Kernbehälters 4 kann sie jedoch nicht gelangen, da dies durch die Temperaturschichtung zwischen Luft und heissem Gas verhindert wird.

## Patentansprüche

1. Behältersystem für einen Hochtemperaturkernreaktor (1) mit einem äusseren, metallischen Druckbehälter (2) und einem inneren, ebenfalls metallischen Kernbehälter (4), zwischen denen ein Raum definiert ist, wobei die Zu- und Abfuhr (16) des Kühlfluids am unteren Ende des Kernbehälters erfolgt, dadurch gekennzeichnet, dass der mit einem umlaufenden Vorsprung (5) versehene Kernbehälter (4) dicht auf einem von der Innenwand des Druckbehälters (2) vorkragenden ebenfalls umlaufenden, oberhalb der Kühlfluidzu- und -abfuhr (16) angeformten Flansch (6) aufliegt und dass der Kernbehälter oberhalb der Auflagestelle gasdicht ausgeführt ist.

2. System nach Anspruch 1, dadurch gekennzeichnet, dass der Raum zwischen Druck- (2) und Kernbehälter (4) oberhalb (8) der Auflagestelle (5, 6) mit demjenigen unterhalb (7) derselben über eine absperrbare (19) erste Ausgleichsleitung (18) in Verbindung steht.

3. System nach Anspruch 2, dadurch gekennzeichnet, dass zusätzlich eine durch eine Berstscheibensicherung (21) verschlossene zweite Ausgleichsleitung (20) vorhanden ist, die vom unteren Ende des Kernbehälters (4) an sein oberes Ende führt, dabei den unteren (7) mit dem oberen Zwischenraum (8) verbindend.

## Claims

1. A container system for a high-temperature nuclear reactor (1) comprising an outer metal pressure container (2) and an inner core container (4), also of metal, between which a space is defined, where the inlet/outlet pipe (16) for the cooling fluid is arranged at the lower end of the core container, characterised in that the core container (4), which is provided with a peripheral projection (5), rests tightly on a similar peripheral flange (6) which projects from the inner wall of the pressure container (2) and is arranged above the cooling fluid inlet/outlet pipe (16); and that the core container is gas-tight above the supporting position.

2. A system as claimed in Claim 1, characterised in that the space (8) between the pressure container (2) and the core container (4) which is located above the supporting position (5, 6), is connected to the space (7) which is located below the supporting position through a first equalising line (18) which can be shut off (19).

3. A system as claimed in Claim 2, characterised in that a second equalising line (20) which is closed by a bursting disc safety device (21) is additionally provided, which line leads from the lower end to the upper end of the core container (4), thereby connecting the lower intermediate space (7) to the upper intermediate space (8).

## Revendications

1. Système de cuves pour un réacteur nucléaire à haute température (1), comprenant une cuve sous pression (2), extérieure, métallique et une cuve intérieure (4) également métallique pour le coeur, entre lesquelles est défini un espace, l'entrée et la sortie (16) du fluide de refroidissement s'effectuant à l'extrémité inférieure de la cuve pour le coeur, caractérisé en ce que la cuve pour le coeur (4), munie d'une partie saillante (5) en faisant tout le tour, est supportée, de manière étanche, sur une bride (6) qui est en saillie de la paroi intérieure de la cuve sous pression (2), qui en fait également tout le tour et qui est formée au-dessus de l'entrée et de la sortie (16) du fluide de refroidissement et en ce que la cuve pour le coeur est agencée de manière étanche au gaz au-dessus de la zone d'appui.

2. Système suivant la revendication 1, caractérisé en ce que l'espace compris entre la cuve sous pression (2) et la cuve pour le coeur (4), au-dessus (8) de la zone d'appui (5, 6), communique avec celui en-dessous (7) de la zone d'appui, par un premier conduit de compensation (18) qui peut être fermé (19).

3. Système suivant la revendication 2, caractérisé en ce qu'il est prévu, en plus, un second conduit de compensation (20) fermé par un dispositif de sécurité à plaques de rupture (21), allant de l'extrémité inférieure de la cuve pour le coeur (4) à son extrémité supérieure, et mettant ainsi en communication l'espace intermédiaire inférieur (7) avec l'espace intermédiaire supérieur (8).